# EUROPÄISCHE PATENTSCHRIFT

(11) **EP 4 062 129 B1**
(45) Veröffentlichungstag und Bekanntmachung des Hinweises auf die Patenterteilung: **20.09.2023**
(21) Anmeldenummer: 20804209.3
(22) Anmeldetag: 09.11.2020
(51) Int. Cl.: G01F 1/56, G01F 1/58

(54) **MAGNETISCH-INDUKTIVE DURCHFLUSSMESSSONDE**
MAGNETIC-INDUCTIVE FLOW PROBE
SONDE DE DÉBIT MAGNÉTO-INDUCTIF

(30) Priorität: 22.11.2019 DE 102019131671
(43) Veröffentlichungstag der Anmeldung: 28.09.2022
(73) Patentinhaber: Endress + Hauser Flowtec AG, 4153 Reinach (CH)
(72) Erfinder: TSCHUDIN, Beat, 4153 Reinach (CH)
(74) Vertreter: Penner, Paul
(86) Internationale Anmeldenummer: PCT/EP2020/081435
(87) Internationale Veröffentlichungsnummer: WO 2021/099153

(56) Entgegenhaltungen:
- EP-A1- 0 892 251
- CN-U- 207 423 282
- DE-A1- 3 707 138
- JP-A- 2005 180 962
- RU-C1- 2 652 649
- US-A- 3 881 350

## Beschreibung

Die Erfindung betrifft eine magnetisch-induktive Durchflussmesssonde und ein Verfahren zur Herstellung eines Frontkörpers einer magnetisch-induktiven Durchflussmesssonde.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss *V̇* ermittelt werden.

Im Gegensatz zu einem magnetisch-induktiven Durchflussmessgerät, welches ein Messrohr mit angebrachtem Feldsystem und Messelektroden umfasst zum Führen des Mediums, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die eingangs erwähnte Messelektrodenanordnung und Spulenanordnung auf der Mantelfläche des Messrohrs entfällt, und wird durch ein im Inneren des Gehäuses und in unmittelbarer Nähe zu den Messelektroden angeordnetes Feldsystem ersetzt, welches so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an magnetisch-induktiven Durchflussmesssonden mit unterschiedlichen Feldsystemen.

Die EP 0 892 251 A1 beispielsweise lehrt eine magnetisch-induktive Durchflussmesssonde mit einer Frontplatte, welche als Kugelkalotte ausgebildet ist, und einer Spule, die auf einen zylindrischen Spulenkern aufgeschoben ist, welcher als Spulenträger fungiert. Bei der Montage der Einzelkomponenten der magnetisch-induktiven Durchflussmesssonde erfolgt das Anordnen und Fixieren des Feldsystems im Gehäuse und das Anbringen der Frontplatte in separaten Montageschritten.

Ausgehend vom Stand der Technik liegt der Erfindung die Aufgabe zugrunde eine magnetisch-induktive Durchflussmesssonde bereitzustellen, die ein kompaktes und einfach zu montierendes Feldsystem aufweist.

Der Erfindung liegt die Aufgabe zugrunde ein entsprechendes Verfahren zur Herstellung eines Feldsystems der magnetisch-induktiven Durchflussmesssonde bereitzustellen, mit reduzierter Anzahl an Montageschritten.

Die Aufgabe wird gelöst durch die magnetisch-induktive Durchflussmesssonde nach Anspruch 1 und das Verfahren zur Herstellung eines Feldsystems nach Anspruch 9.

Die erfindungsgemäße magnetisch-induktive Durchflussmesssonde zum Einsetzen in eine von einem Medium durchströmte Rohrleitung und zum Ermitteln einer strömungsgeschwindigkeitsabhängigen, in dem Medium induzierten Messgröße, umfasst:
- ein Gehäuse, wobei an einer Stirnseite des Gehäuse ein Frontkörper angeordnet ist, welcher das Gehäuse stirnseitig abschließt;
- eine Messelektrodenanordnung zum Bilden eines galvanischen Kontaktes mit dem Medium und zum Abgreifen einer induzierten Spannung im fließenden Medium;
- ein Feldsystem zum Erzeugen eines die Stirnseite des Gehäuses durchsetzenden Magnetfeldes,
   wobei das Feldsystem im Gehäuse angeordnet ist,
   wobei das Feldsystem eine Spulenanordnung umfasst,
   wobei die Spulenanordnung einen Spulenanordnungsträger zum Umwickeln eines Spulendrahtes umfasst,
   wobei der Spulenanordnungsträger und der Frontkörper monolithisch ausgebildet sind.

Üblicherweise weist das Gehäuse der magnetisch-induktiven Durchflussmesssonde einen Hohlraum auf, in dem das Feldsystem, die elektrischen Leiter und anwendungsbedingt auch die Betriebs-, Mess- und/oder Auswerteschaltung angeordnet sind. Das Gehäuse kann aber auch als Vergusskörper ausgebildet bzw. vollvergossen sein, wobei die elektrischen Leiter, die Messelektroden und das Feldsystem mitvergossen sind. Das Gehäuse ist üblicherweise zylindrisch oder hohlzylindrisch ausgebildet, es kann aber auch anwendungsbedingt quaderförmig sein. Die mediumsberührende Ummantelung des Gehäuses ist üblicherweise leitfähig ausgebildet, beispielsweise aus Metall gefertigt oder metallisiert, und dient als Referenzelektrode.

Das Gehäuse ist an der mediumsberührenden Stirnseite mit einem Frontkörper versehen, welcher das Innere des Gehäuses abschließt. Der Frontkörper ist vorzugsweise scheibenförmig ausgebildet. Der Frontkörper dichtet das Gehäuseinnere gegen das fließende Medium in der Rohrleitung ab.

Die magnetisch-induktive Durchflussmesssonde ist so in die Öffnung eines Rohres einzuführen, dass der Frontabschnitt des Gehäuses mit dem zu führenden Medium in unmittelbaren Kontakt steht.

Für das Erfassen einer strömungsgeschwindigkeitsabhängigen, in dem Medium induzierten Messgröße wird eine Messelektrodenanordnung, insbesondere mindestens eine Messelektrode in Kombination mit einer Referenzelektrode benötigt, die mit einem Referenzpotential, insbesondere einem Erdpotential elektrisch verbunden ist. Die Referenzelektrode kann beispielsweise als Stiftelektrode, als Ringelektrode oder auch durch ein teilweise metallisch ausgebildetes Gehäuse realisiert sein, welches mit einem Referenzpotential, z.B. einer Erdung verbunden ist. Handelsübliche magnetisch-induktive Durchflussmesssonden weisen jedoch zwei Messelektroden auf, welche auf einer Messelektrodenachse angeordnet sind und an der mediumsberührenden Stirnfläche des Frontkörpers angeordnet sind, wobei die magnetisch-induktive Durchflussmesssonde so in die Öffnung eines Rohres anzuordnen ist, dass die Messelektrodenachse vorzugsweise senkrecht zur Fließrichtung des Mediums verläuft.

Eine Messelektrodenanordnung bestehend aus mindestens zwei Messelektroden kann für die Herstellung der magnetisch-induktiven Durchflussmesssonde bereits vorkonfektioniert sein, d.h. die mindestens zwei Messelektroden sind über einen Verbindungskörper miteinander verbunden. Eine derartige Messelektrodenanordnung wird dann in das Werkzeug einer Spritzgussanlage eingelegt und mit dem Frontkörper mitvergossen. Alternativ können durchgängige Löcher im Frontkörper vorgesehen werden, in welche die Messelektroden, die üblicherweise als Spitzelektrode ausgebildet sind, eingepresst werden. Es sind magnetisch-induktive Durchflussmesssonden bekannt mit mehr als drei Messelektroden.

Die Spulenanordnung kann genau ein Spule oder mehrere Spulen umfassen. Eine Spule umfasst üblicherweise einen Spulenanordnungsträger mit einer Öffnung und mindestens einen, um den Spulenanordnungsträger gewickelten Spulendraht. Die Öffnung im Spulenanordnungsträger ist vorzugsweise so ausgebildet, dass ein Feldführungskörper, beispielsweise in Form eines Spulenkerns und/oder einer Feldrückführung, formschlüssig einsetzbar ist. Die erfindungsgemäße magnetisch-induktive Durchflussmesssonde umfasst vorzugsweise genau eine Spule.

Der Frontkörper und der Spulenanordnungsträger sind erfindungsgemäß monolithisch ausgebildet. Das heißt, dass Frontkörper und Spulenanordnungsträger aus einem Körper gebildet sind und es keine Verbindungsstelle gibt, d.h. dass beide Komponenten fugenlos miteinander verbunden sind. Dies wird vorzugsweise durch ein Spritzgussverfahren realisiert. Somit erfolgt das Montieren des Feldsystems im Gehäuse und das Abschließen des Gehäuses mit dem Frontkörper in einem einzigen Montageschritt.

Die Erfindung sieht vor, dass die Spulenanordnung eine Kontaktierkörperanordnung aufweist,
wobei die Kontaktierkörperanordnung einen ersten Kontaktierkörper und einen zweiten Kontaktierkörper umfasst,
wobei ein erstes Spulendrahtende des Spulendrahtes mit einem ersten Teilabschnitt des ersten Kontaktierkörpers verbunden ist,
wobei ein zweites Spulendrahtende des Spulendrahtes mit einem ersten Teilabschnitt des zweiten Kontaktierkörpers verbunden ist.

Die Kontaktierkörperanordnung kann durch bereits vorkonfektionierte Kontaktierkörper realisiert sein, welche durch einen Verbindungskörper verbunden sind. Eine derartige Kontaktierkörperanordnung vereinfacht die Montage der Kontaktierkörper in das Werkzeug einer Spritzgussanlage. Die Kontaktierkörperanordnung kann auch einzelne Kontaktierkörper umfassen, welche nicht vorkonfektioniert sind.

Die Kontaktierkörper dienen dazu, den filigranen Spulendraht einfach mit einer Betriebsschaltung zu verbinden. Dafür werden die Spulendrahtenden mit dem ersten Teilabschnitt der jeweiligen Kontaktierkörper verbunden, bzw. um die ersten Teilabschnitte gewickelt. Eine Kontaktiervorrichtung verbindet den Kontaktierkörper elektrisch mit der Betriebsschaltung. Somit ist der Spulendraht nicht direkt mit der Betriebsschaltung verbunden, sondern hat den Kontaktierungskörper dazwischengeschaltet, was eine Vereinfachung der Kontaktierung bei der Montage der Einzelkomponenten der magnetisch-induktiven Durchflussmesssonde zur Folge hat. Der Kontaktierkörper ist vorzugsweise als Biegeblechteil ausgebildet. Des Weiteren sind der erste Kontaktierkörper und der zweite Kontaktierkörper vorzugsweise Gleichteile.

Die Erfindung sieht vor, dass der jeweilige erste Teilabschnitt des ersten Kontaktierkörpers und des zweiten Kontaktierkörpers eine Längsachse aufweist, welche jeweils in einer Querschnittsebene des Spulenanordnungsträgers liegt.

Im Falle, dass die Spulenanordnung und der Spulenanordnungsträger eine gemeinsame Längsachse aufweisen, ist es besonders vorteilhaft, wenn die Längsachsen der jeweiligen ersten Abschnitte der Kontaktierkörper im Wesentlichen in einem gemeinsamen Querschnitt des Spulenanordnungsträger liegen. Beim maschinellen Aufwickeln des Spulendrahtes auf den Spulenanordnungsträger wird das Spulendrahtende zuerst an den ersten Teilabschnitt des ersten Kontaktierkörpers angebracht, danach wird der Spulendraht aufgewickelt. Dies geschieht durch Verfahren eine Wicklervorrichtung in Längsrichtung des Spulenanordnungsträgers oder durch Verfahren des Spulenanordnungsträgers in Längsrichtung. Nach Beenden des Aufwickelns wird der Spulendraht an den ersten Teilabschnitt des zweiten Kontaktierkörpers angebracht. Das Herstellungsverfahren endet mit einem Eintauchen der ersten Teilabschnitte in ein Lötbad. Ein derartiges Herstellungsverfahren lässt sich einfach automatisieren.

Der erste Teilabschnitt der Kontaktierkörper kann an einer Stirnfläche des Spulenanordnungsträgers angeordnet sein. Gemäß einer vorzugsweisen Ausgestaltung sind die Kontaktierkörper parallel zueinander angeordnet. Gemäß einer weiteren Ausgestaltung sind die ersten Teilabschnitte der Kontaktierkörper in einem Mittelstück angeordnet, welches den Spulenanordnungsträger und den Frontkörper miteinander verbindet.

Die ersten Teilabschnitte der beiden Kontaktierkörper können auch in Längsrichtung zum Spulenanordnungsträger versetzt angeordnet sein.

Die Erfindung sieht vor, dass der erste Kontaktierkörper und der zweite Kontaktierkörper jeweils einen zweiten Teilabschnitt aufweisen, welcher formschlüssig mit dem Spulenanordnungsträger verbunden ist und bevorzugt durch den Spulenanordnungsträger umschlossen, insbesondere in eine, den Spulenanordnungsträger bildende Polymermatrix eingebettet ist.

Es ist vorteilhaft, wenn die Kontaktierkörper formschlüssig mit dem Spulenanordnungsträger verbindbar sind, beispielsweise durch ein Anbringen in eine eingelassene Vertiefung im Spulenanordnungsträger.

Es ist besonders vorteilhaft, wenn der Kontaktierkörper einen zweiten Teilabschnitt aufweist, welcher sich im Inneren des Spulenanordnungsträgers erstreckt, bzw. welcher vom Körper des Spulenanordnungsträgers umschlossen ist, so dass eine formschlüssige Verbindung den Kontaktierkörper am Spulenanordnungsträger fixiert. Eine derartige Verbindung kann vorzugsweise durch das Mitvergießen der Kontaktierkörperanordnung beim Spritzgießen des Frontkörpers und des Spulenanordnungsträgers realisiert werden. Der Spulenanordnungsträger kann auch ein Mittelstück umfassen, in welchem der zweite Teilabschnitt angeordnet ist.

Eine Ausgestaltung sieht vor, dass der erste Kontaktierkörper und der zweite Kontaktierkörper im zweiten Teilabschnitt jeweils eine Längsachse aufweisen, welche zur Längsachse des ersten Teilabschnittes und/oder zur Längsachse des Spulenanordnungsträgers geneigt ist.

Dadurch erstreckt sich der zweite Teilabschnitt räumlich weg vom ersten Teilabschnitt, wodurch eine stabilere Befestigung der Kontaktierkörperanordnung bzw. der einzelnen Kontaktierkörper am Spulenanordnungsträger realisiert wird.

Eine Ausgestaltung sieht vor, dass der erste Kontaktierkörper und der zweite Kontaktierkörper jeweils einen dritten Teilabschnitt zum Kontaktieren des Spulendrahtes mit einer Betriebsschaltung aufweisen.

Dabei befindet sich der zweite Teilabschnitt zwischen dem ersten Teilabschnitt und dem dritten Teilabschnitt. Der erste Teilabschnitt dient dem Anbringen und Fixieren des Spulendrahtes. Der dritte Teilabschnitt dient dazu und ist derart ausgebildet, dass eine Betriebsschaltung über eine Kontaktiervorrichtung elektrisch anschließbar ist. Der mittlere dritte Teilabschnitt dient dazu, den dritten Teilbereich örtlich weg vom ersten Teilbereich umzuleiten.

Messschaltungen im Bereich der Durchflussmesstechnik sind hinlänglich bekannt. Die Aufgabe der Messschaltung ist es sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben.

Eine Messschaltung umfasst daher einen Analog/Digital-Wandler, der die eingehende Signale, in dem Fall die aktuell an dem jeweiligen Messelektrodenpaar anliegende Potentialdifferenz oder das an der jeweiligen Messelektrode vorherrschende elektrische Potential, in digitale Daten umwandelt, die dann durch eine Auswerteschaltung weiterverarbeitet oder gespeichert werden. Es sind aber auch andere Messumsetzer oder Messumformer der Digitalen Messtechnik bekannt und geeignet zum Detektieren einer Messspannung oder eines elektrischen Potentials.

Die Auswerteschaltung ist dazu eingerichtet, die durch die Messschaltung gemessenen Messwerte der jeweiligen Messgrößen zu verarbeiten und die gesuchte Messgröße zu ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse der Durchflussmesssonde angeordnet ist.

Eine Ausgestaltung sieht vor, dass die Messelektrodenanordnung im Frontkörper angeordnet ist,
wobei die Messelektrodenanordnung zwei Messelektroden aufweist, welche jeweils einen Endabschnitt zum Verbinden der Messelektroden mit einer Messschaltung aufweisen,
wobei der Endabschnitt im Gehäuse angeordnet ist.
Dabei erstrecken sich die Kontaktierkörper bis hin zu einer in das Innere des Gehäuses befindlichen Stirnfläche des Frontkörpers, wo sich die Endabschnitte der Messelektroden befinden. Gemäß der Ausgestaltung liegen die Endabschnitte der Messelektroden und die dritten Teilabschnitte der Kontaktierkörper in einem gemeinsamen Querschnitt. Dies vereinfacht nicht nur das Anbringen der Kontaktiervorrichtung, über welche eine elektrische Verbindung mit der Betriebsschaltung hergestellt wird, sondern eröffnet auch die Möglichkeit die Endabschnitte und dritten Teilabschnitte über eine einzelne Kontaktiervorrichtung mit der Mess- und/oder Betriebsschaltung zu verbinden.

Eine Ausgestaltung sieht vor, dass eine Längsachse des jeweilige dritten Teilabschnittes des ersten Kontaktierkörpers und des zweiten Kontaktierkörpers im Wesentlichen parallel zur Längsachse des Spulenanordnungsträgers und/oder zum Endabschnitt der Messelektroden verläuft.

Eine Ausgestaltung sieht vor, dass eine Kontaktiervorrichtung dazu eingerichtet ist, die Messelektroden mit der Messschaltung und die Kontaktierkörper mit der Betriebsschaltung zu verbinden.

Eine Ausgestaltung sieht vor, dass die Kontaktiervorrichtung als Platine ausgebildet ist, welche Kontaktanschlüsse aufweist,
wobei zwei Kontaktanschlüsse komplementär zu den Endabschnitten der zwei Messelektroden ausgebildet sind und dazu eingerichtet sind, die Endabschnitte der Messelektroden mit der Messschaltung elektrisch zu verbinden,
wobei zwei Kontaktanschlüsse komplementär zu den dritten Teilabschnitten der zwei Kontaktierungskörper ausgebildet sind und dazu eingerichtet sind, die dritten Teilabschnitte der beiden Kontaktierungskörper mit der Betriebsschaltung elektrisch zu verbinden,
wobei die Kontaktiervorrichtung am Frontkörper formschlüssig angeordnet ist.
Die Platine kann elektronische Komponenten der Mess- und/oder der Betriebsschaltung aufweisen. Bisher werden Spulen und Messelektroden mit der Mess- und/oder Betriebsschaltung einzeln verdrahtet und verlötet.

Eine Ausgestaltung sieht vor, dass der Frontkörper mindestens eine Erhebung zum Fixieren des Frontkörpers beim Aufwickeln des Spulendrahtes aufweist.

Zum automatisierten Aufwickeln des Spulendrahtes auf den Spulenanordnungsträger werden Fixierflächen zum Halten des Spulenanordnungsträgers während des Aufwickelns benötigt. Es ist vorteilhaft, wenn der Frontkörper eine Erhebung aufweist, welche als Fixierfläche dient und über die der Spulenanordnungsträger mit einer Halterung der Wickelanlage befestigt werden kann.

Das erfindungsgemäße Verfahren zur Herstellung eines Feldsystems einer magnetisch-induktiven Durchflussmesssonde, insbesondere der erfindungsgemäßen magnetisch-induktiven Durchflussmesssonde, umfasst die Herstellungsschritte:
- Bereitstellen eines Kerns und eines Formnestes,
   wobei das Formnest eine Aufnahme für jeweils einen der Kontaktierungskörper aufweist,
- Anordnen der Kontaktierungskörper in den jeweiligen Aufnahmen;
- Bilden einer Kavität zwischen Kern und Formnest durch Zusammenführen des Kernes und des Formnestes;
- Auffüllen der Kavität und Umschließen der Kontaktierungskörper mit einer den Frontkörper und die Spulenanordnungsträger bildenden Vergussmasse; und
   - Aushärten der Vergussmasse.

Ein Mitvergießen eines Teilabschnittes der Kontaktierkörper bei der Herstellung des Frontkörpers und Spulenanordnungsträgers verkürzt die Anzahl an Montageschritten und stellt eine ausreichende Fixierung des Kontaktierkörpers bzw. der Kontaktierkörperanordnung im Spulenanordnungsträger bereit.

Als besonders vorteilhaftes Verfahren zum Auffüllen der Kavität eignet sich ein Spritzgussverfahren.

Die Erfindung sieht folgende Verfahrensschritte vor:
- Aufwickeln des Spulendrahtes auf den ersten Teilabschnitt des ersten Kontaktierkörpers;
- Umwickeln des Spulenanordnungsträgers mit dem Spulendraht entlang einer ersten Richtung im Wesentlichen parallel zur Längsachse des Spulenanordnungsträger;
- Umwickeln des Spulenanordnungsträgers mit dem Spulendraht entlang einer zweiten Richtung, welche entgegengesetzt zur ersten Richtung orientiert ist;
- Aufwickeln des Spulendrahtes auf den ersten Teilabschnitt des zweiten Kontaktierkörpers.

Eine Ausgestaltung sieht vor, dass der erste Kontaktierungskörper und/oder der zweite Kontaktierungskörper beim Zusammenführen des Kernes und des Formnestes mittels Biegeumformens in einen finalen Zustand geformt wird,
wobei im finalen Zustand die Längsachse im ersten Teilabschnitt des ersten Kontaktierkörpers in der Querschnittsebene des Spulenanordnungsträgers im Wesentlich senkrecht zur Längsachse des Spulenanordnungsträgers und die Längsachse des dritten Teilabschnittes des ersten Kontaktierungskörpers im Wesentlichen parallel zur Längsachse des Spulenanordungsträgers verläuft.

Beim Zusammenbringen der Gießwerkzeuge, insbesondere beim Einführen des Kernes in das Formnest liegt ausreichend kinetische Energie vor, um die Kontaktierkörper zu verformen. Es ist daher vorteilhaft, wenn die Kontaktierkörper nicht oder nur teilweise vorgebogen sind, und erst beim Einführen des Kernes in das Formnest in den finalen Zustand umgeformt, insbesondere gebogen werden.

Die Erfindung wird anhand der nachfolgenden Figuren näher erläutert. Es zeigt:
Fig. 1: zwei Ansichten auf eine Ausgestaltung des erfindungsgemäßen Frontkörpers und Spulenanordnungsträgers,
Fig. 2: eine Seitenansicht auf die Ausgestaltung des Frontkörpers mit montierten Spulenkern, Feldrückführung und Kontaktierkörper,
Fig. 3: zwei Ansichten auf die an einem Gehäuse montierten Ausgestaltung des erfindungsgemäßen Frontkörpers,
Fig. 4: eine in einer Rohrleitung eingebaute erfindungsgemäße magnetisch-induktive Durchflussmesssonde, und
Fig. 5: ein Flussdiagramm einer Ausgestaltung des erfindungsgemäßen Verfahrens zur Herstellung eines Frontkörpers.

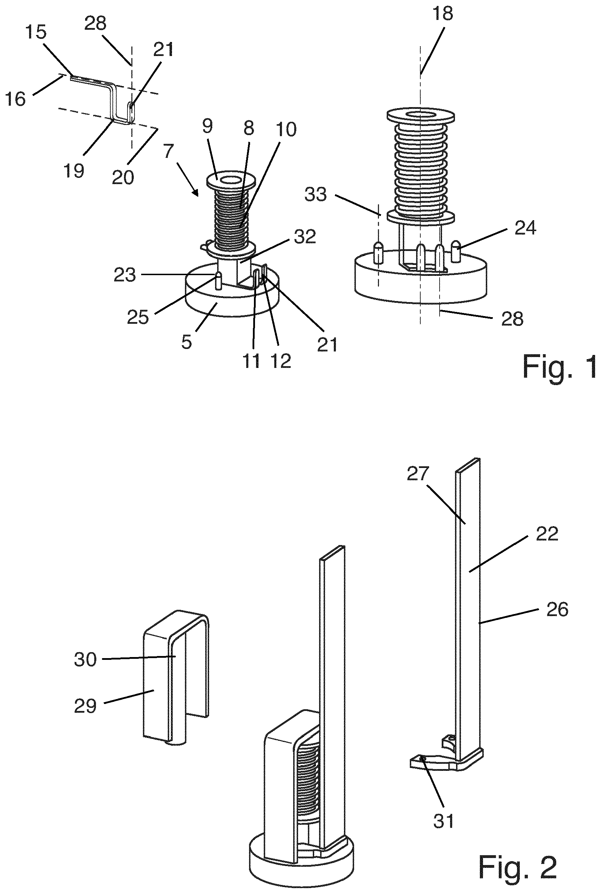

Die Fig. 1 zeigt zwei Ansichten auf eine Ausgestaltung des erfindungsgemäßen Frontkörpers und Spulenanordnungsträgers. Der Frontkörper 5 weist einen zylindrischen Grundkörper auf. Des Weiteren weist der Frontkörper 5 zwei Stirnflächen auf, wobei eine erste Stirnfläche mediumsberührend ist und eine zweite Stirnfläche sich im Inneren des Gehäuses 3 befindet. Eine Messelektrodenanordnung 6 ist im Frontkörper 5 angeordnet. Die Messelektroden 23, 24 erstrecken sich von der ersten Stirnfläche zur zweiten Stirnfläche, durch den Frontkörper 5. Die Messelektroden 23, 24 weisen jeweils einen mediumsberührenden Frontabschnitt auf und einen Endabschnitte 25, welcher sich ins Innere des Gehäuses 3 erstreckt. Die Messelektroden 23, 24 weisen jeweils eine Längsachse 33 auf, welche parallel zur Längsachse des Spulenanordnungsträgers 9 verläuft und die zweite Stirnfläche senkrecht schneidet. Die Messelektroden 23, 24 sind gemäß der abgebildeten Ausgestaltung jeweils als Stiftelektrode ausgebildet.

Der Frontkörper 5 ist mit einem Spulenanordnungsträger 9 monolithisch ausgebildet. Gemäß der abgebildeten Ausgestaltung ist zwischen Frontkörper 5 und Spulenanordnungsträger 9 ein monolithisch mit dem Frontkörper 5 und dem Spulenanordnungsträger 9 verbundenes Mittelstück 32 angeordnet. Der Spulenanordnungsträger 9 weist eine hohlzylindrische Grundform auf. Die Wickelfläche, auf welche der Spulendraht 10 aufgewickelt ist wird durch zwei Scheiben in beiden Längsrichtungen des Spulenanordnungsträgers 9 begrenzt. Am Spulenanordnungsträger 9 ist eine Spulenanordnung 8 angebracht. Gemäß der abgebildeten Ausgestaltung umfasst die Spulenanordnung 8 genau eine Spule.

Die Spulendrahtenden des Spulendrahtes 10 sind mit zwei Kontaktierkörpern 11, 12, insbesondere mit den ersten Teilabschnitten 15 der Kontaktierkörper 11, 12 verbunden. Die Kontaktierkörper 11, 12 sind so geformt, dass die jeweiligen Längsachsen des ersten Teilabschnittes 15 der Kontaktierkörper 11, 12 in einem gemeinsamen Querschnitt des Spulenanordnungsträgers 9 liegen. Des Weiteren sind die Kontaktierkörper 11, 12 so geformt, dass ein zweiter Teilabschnitt 19 zur Längsachse des Spulenanordnungsträgers 9 geneigt ist und die Längsachse 28 eines dritten Teilabschnittes 21 parallel zur Längsachse 18 des Spulenanordnungsträgers 9 verläuft. Die Kontaktierkörper 11, 12, insbesondere der jeweilige dritte Teilabschnitt 21 der Kontaktierkörper 11, 12 sind teilweise durch die den Spulenanordnungsträger 9 bildende Polymermatrix umschlossen. In der abgebildeten Ausgestaltung erstreckt sich der zweite Teilabschnitt im Mittelstück 32. Der dritten Teilabschnitt 21 erstreckt sich ausgehend von der zweiten Stirnfläche des Frontkörpers 5 aus in Richtung des Inneren des Gehäuses 3.

Ein separat abgebildeter Kontaktierkörper weist in gestrichelten Linien die einzelnen Längsachsen 16, 20, 28 der drei Teilabschnitte 15, 19, 21 auf.

Die Fig. 2 zeigt eine Seitenansicht auf die Ausgestaltung des Frontkörpers 5 und des Spulenanordnungsträgers 9 mit montierten Spulenkern 30, Feldrückführung 29 und Kontaktiervorrichtung 27. Der abgebildete Frontkörper 5 weist alle wesentlichen Merkmale der Fig. 1 auf. Zusätzlich zum Spulenanordnungsträger 9 und zum Frontkörper 5 ist eine Feldrückführung 29, ein Spulenkern 30, welcher sich durch die Querschnittsflächen der Spule erstreckt, und eine Kontaktiervorrichtung 27 abgebildet.

Weiterhin zeigt die Fig. 2 einen Spulenkern 30 mit einer Feldrückführung 29 und eine Kontaktiervorrichtung 27, wobei die Kontaktiervorrichtung 27 Kontaktanschlüsse 31 für die Messelektroden und die Kontaktierkörper aufweist, zum Verbinden ebendieser mit einer Mess- und/oder Betriebsschaltung 22, 26. Der Spulenkern 30 ist zylindrisch ausgebildet und die Feldrückführung 29 hat die Grundform eines zweifach gebogenen Streifens. Feldrückführung 29 und Spulenkern 30 können monolithisch ausgebildet sein, oder aus mindestens zwei zusammengesetzten Einzelkomponenten bestehen. Die Kontaktiervorrichtung 27 ist aus einer Platine gebildet und umfasst die Mess- und/oder Betriebsschaltung 22, 26.

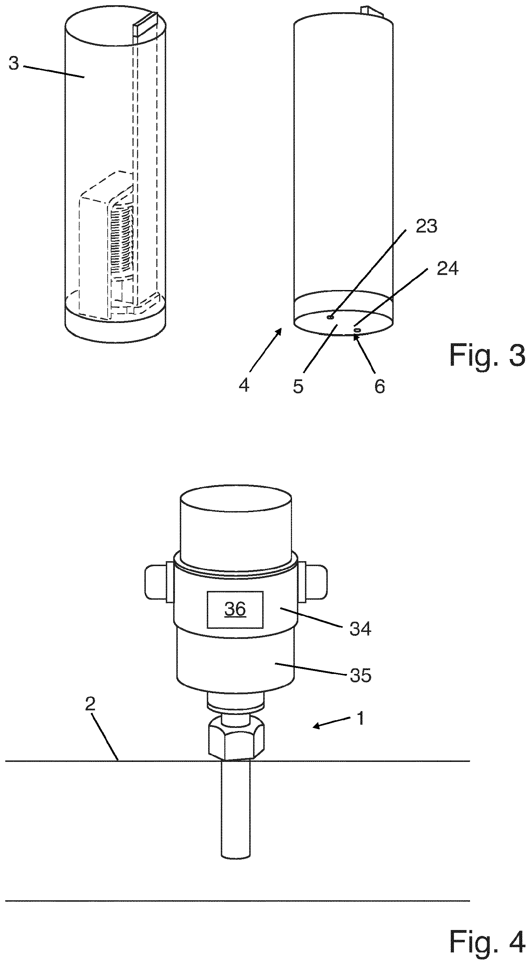

Die Fig. 3 zeigt zwei Ansichten auf die an der Stirnseite 4 eines Gehäuses 3 montierten Ausgestaltung des erfindungsgemäßen Frontkörpers 5. Das Gehäuse 3 weist eine zylindrische Grundform auf. Das Gehäuse 3 kann mit einer Vergussmasse zum Fixieren des Feldsystems vergossen sein. Der Frontkörper 5 der abgebildeten Ausgestaltung weist eine Messelektrodenanordnung 6 mit zwei auf einem Durchmesser des Frontkörpers 5 liegenden Messelektroden 23, 24 auf. Der Frontkörper 5 ist in das Gehäuse 3 mediumsdichtend eingepresst oder mit einer Dichtung mediumsdicht angeordnet, insbesondere verpresst.

Die Fig. 4 zeigt eine in einer Rohrleitung 2 eingebaute erfindungsgemäße magnetisch-induktive Durchflussmesssonde 1. An die magnetisch-induktive Durchflussmesssonde 1 ist ein Transmitter mit einer Auswerteschaltung 34 und einer Sendeeinheit 35 angeschlossen. Optional kann der Transmitter ein Display 36 aufweisen.

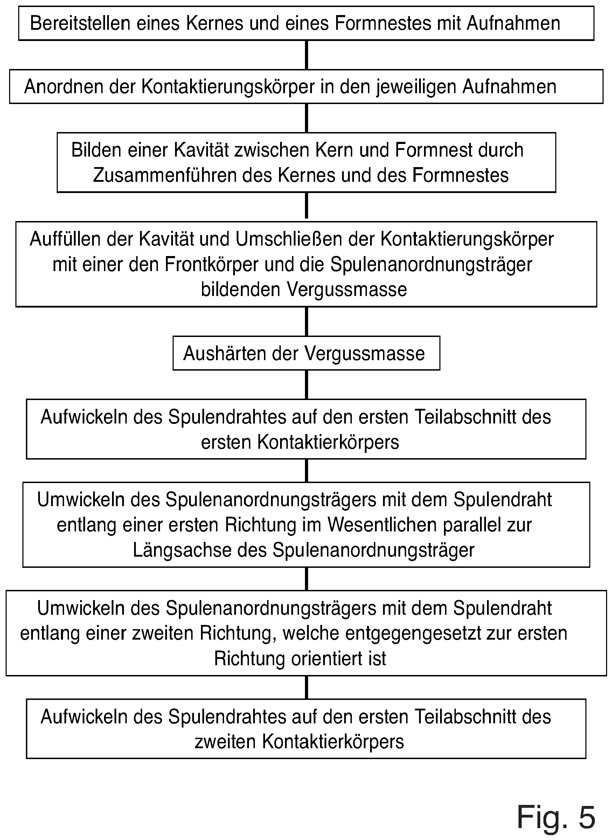

Die Fig. 5 zeigt ein Flussdiagramm einer Ausgestaltung des erfindungsgemäßen Verfahrens zur Herstellung des Feldsystems mit folgenden Verfahrensschritten:
Bereitstellen eines Kerns und eines Formnestes, wobei das Formnest eine Aufnahme für jeweils einen der Kontaktierungskörper aufweist.
- Anordnen der Kontaktierungskörper in den jeweiligen Aufnahmen, wobei die Kontaktierkörper entweder vorgeformt, teilweise vorgeformt oder beim Einführen des Kernes in das Formnest in die finale Form gebogen werden.
- Bilden einer Kavität zwischen Kern und Formnest durch Zusammenführen des Kernes und des Formnestes;
- Auffüllen der Kavität und Umschließen der Kontaktierungskörper mit einer den Frontkörper und die Spulenanordnungsträger bildenden Vergussmasse, insbesondere durch ein Spritzgussverfahren; und
- Aushärten der Vergussmasse;
- Aufwickeln des Spulendrahtes auf den ersten Teilabschnitt des ersten Kontaktierkörpers;
- Umwickeln des Spulenanordnungsträgers mit dem Spulendraht entlang einer ersten Richtung im Wesentlichen parallel zur Längsachse des Spulenanordnungsträgers;
- Umwickeln des Spulenanordnungsträgers mit dem Spulendraht entlang einer zweiten Richtung, welche entgegengesetzt zur ersten Richtung orientiert ist;
- Aufwickeln des Spulendrahtes auf den ersten Teilabschnitt des zweiten Kontaktierkörpers.

Gemäß einer weiteren Ausgestaltung wird der erste Kontaktierungskörper und/oder der zweite Kontaktierungskörper beim Zusammenführen des Kernes und des Formnestes mittels Biegeumformens in einen finalen Zustand geformt, wobei im finalen Zustand die Längsachse im ersten Teilabschnitt des ersten Kontaktierkörpers in der Querschnittsebene des Spulenanordnungsträgers im Wesentlichen senkrecht zur Längsachse des Spulenanordnungsträgers und die Längsachse des dritten Teilabschnittes des ersten Kontaktierungskörpers im Wesentlichen parallel zur Längsachse des Spulenanordnungsträgers verläuft.

### Bezugszeichenliste

- 1: Magnetisch-induktive Durchflussmesssonde
- 2: Rohrleitung
- 3: Gehäuse
- 4: Stirnseite
- 5: Frontkörper
- 6: Messelektrodenanordnung
- 7: Feldsystem
- 8: Spulenanordnung
- 9: Spulenanordnungsträger
- 10: Spulendraht
- 11: erster Kontaktierkörper
- 12: zweiter Kontaktierkörper
- 15: ersten Teilabschnitt
- 16: Längsachse des ersten Teilabschnittes
- 18: Längsachse des Spulenanordnungsträgers
- 19: zweiten Teilabschnitt
- 20: Längsachse des zweiten Teilabschnittes
- 21: dritten Teilabschnitt
- 22: Betriebsschaltung
- 23: Messelektrode
- 24: Messelektrode
- 25: Endabschnitt einer Messelektrode
- 26: Messschaltung
- 27: Kontaktiervorrichtung
- 28: Längsachse des dritten Teilabschnittes
- 29: Feldrückführung
- 30: Spulenkern
- 31: Kontaktanschluss
- 32: Mittelstück
- 33: Längsachse der Messelektrode
- 34: Auswerteschaltung
- 35: Sendeeinheit
- 36: Display

## Patentansprüche

1. Magnetisch-induktive Durchflussmesssonde (1) zum Einsetzen in eine von einem Medium durchströmte Rohrleitung (2) und zum Ermitteln einer strömungsgeschwindigkeitsabhängigen, in dem Medium induzierten Messgröße, umfassend:
- ein Gehäuse (3),
wobei an einer Stirnseite (4) des Gehäuse (3) ein Frontkörper (5) angeordnet ist, welcher das Gehäuse (3) stirnseitig abschließt;
- eine Messelektrodenanordnung (6) zum Bilden eines galvanischen Kontaktes mit dem Medium und zum Abgreifen einer induzierten Spannung im fließenden Medium;
- ein Feldsystem (7) zum Erzeugen eines die Stirnseite (4) des Gehäuses (3) durchsetzenden Magnetfeldes,
wobei das Feldsystem (7) im Gehäuse (3) angeordnet ist,
wobei das Feldsystem (7) eine Spulenanordnung (8) umfasst,
wobei die Spulenanordnung (8) einen Spulenanordnungsträger (9) zum Umwickeln eines Spulendrahtes (10) umfasst,
wobei die Spulenanordnung (8) eine Kontaktierkörperanordnung aufweist,
wobei die Kontaktierkörperanordnung einen ersten Kontaktierkörper (11) und einen zweiten Kontaktierkörper (12) umfasst,
**dadurch gekennzeichnet, dass** der Spulenanordnungsträger (9) und der Frontkörper (5) derart monolithisch ausgebildet sind, dass sie einen Körper bilden und es keine Verbindungsstellen gibt,
dass ein jeweiliger erster Teilabschnitt (15) des ersten Kontaktierkörpers (11) und des zweiten Kontaktierkörpers (12) eine Längsachse (16) aufweist, welche in einer Querschnittsebene des Spulenanordnungsträgers (9) liegt,
dass der erste Kontaktierkörper (11) und der zweite Kontaktierkörper (12) jeweils einen zweiten Teilabschnitt (19) aufweisen, welcher formschlüssig mit dem Spulenanordnungsträger (9) verbunden ist und in eine, den Spulenanordnungsträger (9) bildende Polymermatrix eingebettet ist,
wobei ein erstes Spulendrahtende des Spulendrahtes (10) mit einem ersten Teilabschnitt (15) des ersten Kontaktierkörpers (11) verbunden ist,
wobei ein zweites Spulendrahtende des Spulendrahtes (10) mit einem ersten Teilabschnitt (15) des zweiten Kontaktierkörpers (12) verbunden ist.

2. Magnetisch-induktive Durchflussmesssonde (1) nach Anspruch 1,
wobei der erste Kontaktierkörper (11) und der zweite Kontaktierkörper (12) im zweiten Teilabschnitt (19) jeweils eine Längsachse (20) aufweisen, welche zur Längsachse (16) des ersten Teilabschnittes (15) geneigt ist.

3. Magnetisch-induktive Durchflussmesssonde (1) nach Anspruch 1 oder 2,
wobei der erste Kontaktierkörper (11) und der zweite Kontaktierkörper (12) jeweils einen dritten Teilabschnitt (21) zum Kontaktieren des Spulendrahtes (10) mit einer Betriebsschaltung (22) aufweisen.

4. Magnetisch-induktive Durchflussmesssonde (1) nach mindestens einem der vorhergehenden Ansprüche,
wobei die Messelektrodenanordnung (6) im Frontkörper (5) angeordnet ist,
wobei die Messelektrodenanordnung (6) zwei Messelektroden (23, 24) aufweist, welche jeweils einen Endabschnitt (25) zum Verbinden der Messelektroden (23, 24) mit einer Messschaltung (26) aufweisen,
wobei der Endabschnitt (25) im Gehäuse (3) angeordnet ist.

5. Magnetisch-induktive Durchflussmesssonde (1) nach Anspruch 4,
wobei eine Längsachse (28) des jeweilige dritten Teilabschnittes (21) des ersten Kontaktierkörpers (11) und des zweiten Kontaktierkörpers (12) im Wesentlichen parallel zur Längsachse (18) des Spulenanordnungsträgers (9) und/oder zum Endabschnitt (25) der Messelektroden (23, 24) verläuft.

6. Magnetisch-induktive Durchflussmesssonde (1) nach Anspruch 5,
wobei eine Kontaktiervorrichtung (27) dazu eingerichtet ist, die Messelektroden (23, 24) mit der Messschaltung (26) und die Kontaktierkörper (11, 12) mit der Betriebsschaltung (22) zu verbinden.

7. Magnetisch-induktive Durchflussmesssonde (1) nach Anspruch 6,
wobei die Kontaktiervorrichtung (27) als Platine ausgebildet ist, welche Kontaktanschlüsse aufweist,
wobei zwei Kontaktanschlüsse komplementär zu den Endabschnitten (25) der zwei Messelektroden (23, 24) ausgebildet sind und dazu eingerichtet sind, die Endabschnitte (25) der Messelektroden (23, 24) mit der Messschaltung (26) elektrisch zu verbinden,
wobei zwei Kontaktanschlüsse komplementär zu den dritten Teilabschnitten (21) der zwei Kontaktierungskörper (11, 12) ausgebildet sind und dazu eingerichtet sind, die dritten Teilabschnitte (21) der beiden Kontaktierungskörper (11, 12) mit der Betriebsschaltung (22) elektrisch zu verbinden,
wobei die Kontaktiervorrichtung (27) am Frontkörper (5) formschlüssig angeordnet ist.

8. Magnetisch-induktive Durchflussmesssonde (1) nach einem der vorhergehenden Ansprüche,
wobei der Frontkörper (5) mindestens eine Erhebung zum Fixieren des Frontkörpers (5) beim Aufwickeln des Spulendrahtes (10) aufweist.

9. Verfahren zur Herstellung eines Feldsystems (7) der magnetisch-induktiven Durchflussmesssonde (1) nach einem der vorhergehenden Ansprüche, umfassend die Herstellungsschritte:
- Bereitstellen eines Kerns und eines Formnestes,
wobei das Formnest eine Aufnahme für jeweils einen der Kontaktierungskörper (11, 12) aufweist,
- Anordnen der Kontaktierungskörper (11, 12) in den jeweiligen Aufnahmen;
- Bilden einer Kavität zwischen Kern und Formnest durch Zusammenführen des Kernes und des Formnestes;
- Auffüllen der Kavität und Umschließen der Kontaktierungskörper mit einer den Frontkörper (5) und die Spulenanordnungsträger (9) bildenden Vergussmasse;
- Aushärten der Vergussmasse;
- Aufwickeln des Spulendrahtes (10) auf den ersten Teilabschnitt (15) des ersten Kontaktierkörpers (11);
- Umwickeln des Spulenanordnungsträgers (9) mit dem Spulendraht (10) entlang einer ersten Richtung im Wesentlichen parallel zur Längsachse (18) des Spulenanordnungsträger (9);
- Umwickeln des Spulenanordnungsträgers (9) mit dem Spulendraht (10) entlang einer zweiten Richtung, welche entgegengesetzt zur ersten Richtung orientiert ist; und
- Aufwickeln des Spulendrahtes (10) auf den ersten Teilabschnitt (15) des zweiten Kontaktierkörpers (12).

10. Verfahren nach Anspruch 9,
wobei der erste Kontaktierungskörper (11) und/oder der zweite Kontaktierungskörper (12) beim Zusammenführen des Kernes und des Formnestes mittels Biegeumformens in einen finalen Zustand geformt wird,
wobei im finalen Zustand die Längsachse (16) im ersten Teilabschnitt (15) des ersten Kontaktierkörpers (11) in der Querschnittsebene des Spulenanordnungsträgers (9) im Wesentlich senkrecht zur Längsachse (18) des Spulenanordnungsträgers (9) und die Längsachse (28) des dritten Teilabschnittes (21) des ersten Kontaktierungskörpers (11) im Wesentlichen parallel zur Längsachse (18) des Spulenanordungsträgers (9) verläuft.

## Claims

1. A magnetic-inductive flowmeter (1) for insertion into a conduit (2) through which a medium flows and for determining a flow-rate-dependent measured variable induced in the medium, comprising:
- a housing (3),
wherein a front body (5) is arranged on an end face (4) of the housing (3) and seals the housing (3) at the end face;
- a measurement electrode arrangement (6) for forming a galvanic contact with the medium and for tapping an induced voltage in the flowing medium;
- a field system (7) for generating a magnetic field passing through the end face (4) of the housing (3),
wherein the field system (7) is arranged in the housing (3),
wherein the field system (7) comprises a coil arrangement (8),
wherein the coil arrangement (8) comprises a coil arrangement carrier (9) for winding a coil wire (10) around,
wherein the coil arrangement (8) has a contacting body arrangement,
wherein the contacting body arrangement comprises a first contacting body (11) and a second contacting body (12),
**wherein** the coil arrangement carrier (9) and the front body (5) are formed monolithically in such a way that they form one body and there are no connection points,
wherein a respective first portion (15) of the first contacting body (11) and of the second contacting body (12) has a longitudinal axis (16) which lies in a cross-sectional plane of the coil arrangement carrier (9), and
wherein the first contacting body (11) and the second contacting body (12) in each case have a second portion (19) which is connected form-fittingly to the coil arrangement carrier (9) and is embedded in a polymer matrix forming the coil arrangement carrier (9),
wherein a first coil wire end of the coil wire (10) is connected to a first portion (15) of the first contacting body (11), and
wherein a second coil wire end of the coil wire (10) is connected to a first portion (15) of the second contacting body (12).

2. The magnetic-inductive flowmeter (1) as claimed in claim 1,
wherein the first contacting body (11) and the second contacting body (12) in the second portion (19) each have a longitudinal axis (20) which is inclined relative to the longitudinal axis (16) of the first portion (15).

3. The magnetic-inductive flowmeter (1) as claimed in claim 1 or 2,
wherein the first contacting body (11) and the second contacting body (12) in each case have a third portion (21) for contacting the coil wire (10) with an operating circuit (22) .

4. The magnetic-inductive flowmeter (1) as claimed in at least one of the preceding claims,
wherein the measurement electrode arrangement (6) is arranged in the front body (5),
wherein the measurement electrode arrangement (6) has two measurement electrodes (23, 24), each of which has an end portion for connecting the measurement electrodes (23, 24) to a measurement circuit (26),
wherein the end portion (25) is arranged in the housing (3) .

5. The magnetic-inductive flowmeter (1) as claimed in claim 4,
wherein a longitudinal axis (28) of the respective third portion (21) of the first contacting body (11) and of the second contacting body (12) runs substantially parallel to the longitudinal axis (18) of the coil arrangement carrier (9) and/or to the end portion (25) of the measurement electrodes (23, 24).

6. The magnetic-inductive flowmeter (1) as claimed in claim 5,
wherein a contacting device (27) is configured to connect the measurement electrodes (23, 24) to the measurement circuit (26) and the contacting bodies (11, 12) to the operating circuit (22).

7. The magnetic-inductive flowmeter (1) as claimed in claim 6,
wherein the contacting device (27) is designed as a printed circuit board which has contact terminals,
wherein two contact terminals are formed in a manner complementary to the end portions (25) of the two measurement electrodes (23, 24) and are configured to electrically connect the end portions (25) of the measurement electrodes (23, 24) to the measurement circuit (26),
wherein two contact terminals are formed in a manner complementary to the third portions (21) of the two contacting bodies (11, 12) and are configured to electrically connect the third portions (21) of the two contacting bodies (11, 12) to the operating circuit (22),
wherein the contacting device (27) is arranged form-fittingly on the front body (5).

8. The magnetic-inductive flowmeter (1) as claimed in any one of the preceding claims,
wherein the front body (5) has at least one elevation for fixing the front body (5) when the coil wire (10) is being wound.

9. A method for producing a field system (7) of the magnetic-inductive flowmeter (1) as claimed in any one of the preceding claims, comprising the production steps of:
- providing a core and a mold cavity,
wherein the mold cavity has a receptacle for, in each case, one of the contacting bodies (11, 12),
- arranging the contacting bodies (11, 12) in the respective receptacles;
- forming a cavity between core and mold cavity by bringing together the core and the mold cavity;
- filling the cavity and encapsulating the contacting bodies with a casting compound forming the front body (5) and the coil arrangement carriers (9);
- curing the casting compound;
- winding the coil wire (10) onto the first portion (15) of the first contacting body (11);
- winding the coil arrangement carrier (9) with the coil wire (10) in a first direction substantially parallel to the longitudinal axis (18) of the coil arrangement carrier (9);
- winding the coil arrangement carrier (9) with the coil wire (10) in a second direction, which is oriented oppositely to the first direction; and
- winding the coil wire (10) onto the first portion (15) of the second contacting body (12).

10. The method as claimed in claim 9,
wherein the first contacting body (11) and/or the second contacting body (12) is shaped into a final state by means of bend-forming when the core and the mold cavity are brought together,
wherein, in the final state, the longitudinal axis (16) in the first portion (15) of the first contacting body (11) in the cross-sectional plane of the coil arrangement carrier (9) runs substantially perpendicular to the longitudinal axis (18) of the coil arrangement carrier (9), and the longitudinal axis (28) of the third portion (21) of the first contacting body (11) runs substantially parallel to the longitudinal axis (18) of the coil arrangement carrier (9).

## Revendications

1. Sonde de mesure de débit électromagnétique (1) destinée à être insérée dans une conduite (2) traversée par un produit, et à déterminer une grandeur de mesure dépendant de la vitesse d'écoulement et induite dans le produit, laquelle sonde comprend :
- un boîtier (3),
un corps frontal (5) étant disposé sur une face frontale (4) du boîtier (3), lequel corps ferme le boîtier (3) sur le côté frontal ;
- un arrangement d'électrodes de mesure (6) destiné à former un contact galvanique avec le produit et à prélever une tension induite dans le produit qui s'écoule ;
- un système de champ (7) destiné à générer un champ magnétique traversant la face frontale (4) du boîtier (3),
le système de champ (7) étant disposé dans le boîtier (3),
le système de champ (7) comprenant un arrangement de bobine (8),
l'arrangement de bobine (8) comprenant un support d'arrangement de bobine (9) destiné à enrouler un fil de bobine (10),
l'arrangement de bobine (8) comprenant un arrangement de corps de contact, l'arrangement de corps de contact comprenant un premier corps de contact (11) et un deuxième corps de contact (12),
**caractérisé**
**en ce que** le support d'arrangement de bobine (9) et le corps frontal (5) sont formés de manière monolithique de telle sorte qu'ils forment un corps et qu'il n'y a pas de points de connexion,
**en ce qu'**une première section partielle (15) respective du premier corps de contact (11) et du deuxième corps de contact (12) présente un axe longitudinal (16) qui se trouve dans un plan de section transversale du support d'arrangement de bobine (9),
**en ce que** le premier corps de contact (11) et le deuxième corps de contact (12) présentent chacun une deuxième section partielle (19), laquelle est reliée par complémentarité de forme au support d'arrangement de bobine (9) et est noyée dans une matrice polymère formant le support d'arrangement de bobine (9),
une première extrémité du fil de bobine (10) étant reliée à une première section partielle (15) du premier corps de contact (11),
une deuxième extrémité du fil de bobine (10) étant reliée à une première section partielle (15) du deuxième corps de contact (12).

2. Sonde de mesure de débit électromagnétique (1) selon la revendication 1,
pour laquelle le premier corps de contact (11) et le deuxième corps de contact (12) présentent chacun dans la deuxième section partielle (19) un axe longitudinal (20) qui est incliné par rapport à l'axe longitudinal (16) de la première section partielle (15).

3. Sonde de mesure de débit électromagnétique (1) selon la revendication 1 ou 2,
pour laquelle le premier corps de contact (11) et le deuxième corps de contact (12) comprennent chacun une troisième section partielle (21) pour mettre en contact le fil de bobine (10) avec un circuit d'exploitation (22).

4. Sonde de mesure de débit électromagnétique (1) selon au moins l'une des revendications précédentes,
pour laquelle l'arrangement d'électrodes de mesure (6) est disposé dans le corps frontal (5),
pour laquelle l'arrangement d'électrodes de mesure (6) comprend deux électrodes de mesure (23, 24), lesquelles présentent chacune une partie d'extrémité (25) pour relier les électrodes de mesure (23, 24) à un circuit de mesure (26),
la partie d'extrémité (25) étant disposée dans le boîtier (3).

5. Sonde de mesure de débit électromagnétique (1) selon la revendication 4,
pour laquelle un axe longitudinal (28) de la troisième section partielle (21) respective du premier corps de contact (11) et du deuxième corps de contact (12) s'étendent pour l'essentiel parallèlement à l'axe longitudinal (18) du support d'arrangement de bobine (9) et/ou à la partie d'extrémité (25) des électrodes de mesure (23, 24).

6. Sonde de mesure de débit électromagnétique (1) selon la revendication 5,
pour laquelle un dispositif de contact (27) est conçu pour relier les électrodes de mesure (23, 24) au circuit de mesure (26) et les corps de contact (11, 12) au circuit d'exploitation (22).

7. Sonde de mesure de débit électromagnétique (1) selon la revendication 6,
pour laquelle le dispositif de contact (27) est conçu comme une carte imprimée présentant des connexions de contact,
deux connexions de contact étant formées de manière complémentaire aux parties d'extrémité (25) des deux électrodes de mesure (23, 24) et étant conçues pour relier électriquement les parties d'extrémité (25) des électrodes de mesure (23, 24) au circuit de mesure (26),
deux connexions de contact étant formées de manière complémentaire aux troisièmes sections partielles (21) des deux corps de contact (11, 12) et étant conçues pour relier électriquement les troisièmes sections partielles (21) des deux corps de contact (11, 12) au circuit d'exploitation (22),
le dispositif de contact (27) étant disposé sur le corps frontal (5) par complémentarité de forme.

8. Sonde de mesure de débit électromagnétique (1) selon l'une des revendications précédentes,
pour laquelle le corps frontal (5) présente au moins un bossage pour fixer le corps frontal (5) lors de l'enroulement du fil de bobine (10).

9. Procédé destiné à la fabrication d'un système de champ (7) de la sonde de débit électromagnétique (1) selon l'une des revendications précédentes, lequel procédé comprend les étapes de fabrication suivantes :
- Préparation d'un noyau et d'une cavité de moulage,
la cavité de moulage présentant un logement pour chacun des corps de contact (11, 12),
- Disposition des corps de contact (11, 12) dans les logements respectifs ;
- Formation d'une cavité entre le noyau et la cavité de moulage en réunissant le noyau et la cavité de moulage ;
- Remplissage de la cavité et enrobage des corps de contact avec une masse de scellement formant le corps frontal (5) et les supports d'arrangement de bobine (9);
- Durcissement de la masse de scellement ;
- Enroulement du fil de bobine (10) sur la première section (15) du premier corps de contact (11) ;
- Enroulement du fil de bobinage (10) autour du support d'arrangement de bobine (9) le long d'une première direction pour l'essentiel parallèle à l'axe longitudinal (18) du support d'arrangement de bobine (9) ;
- Enroulement du fil de bobinage (10) autour du support d'arrangement de bobine (9) le long d'une deuxième direction, laquelle est orientée à l'opposé de la première direction ; et
- Enroulement du fil de bobine (10) sur la première section (15) du deuxième corps de contact (12).

10. Procédé selon la revendication 9,
pour lequel le premier corps de contact (11) et/ou le deuxième corps de contact (12) est/sont formé(s) dans un état final lors de la réunion du noyau et de la cavité de moulage au moyen d'un formage par flexion,
pour lequel, à l'état final, l'axe longitudinal (16) dans la première section partielle (15) du premier corps de contact (11) dans le plan de section transversale du support d'arrangement de bobine (9) est pour l'essentiel perpendiculaire à l'axe longitudinal (18) du support d'arrangement de bobine (9), et l'axe longitudinal (28) de la troisième section partielle (21) du premier corps de contact (11) est pour l'essentiel parallèle à l'axe longitudinal (18) du support d'arrangement de bobine (9).
